Europäisches Patentamt

(19) European Patent Office

Office européen des brevets

(11) Publication number: **0 021 576**
**B1**

(12) **EUROPEAN PATENT SPECIFICATION**

(45) Date of publication of patent specification: **20.07.83**

(51) Int. Cl.³: **B 01 D 33/32**

(21) Application number: **80301519.7**

(22) Date of filing: **09.05.80**

(54) **Improvements in and relating to travelling water screens.**

(30) Priority: **08.06.79 GB 7920034**

(43) Date of publication of application:
**07.01.81 Bulletin 81/1**

(45) Publication of the grant of the patent:
**20.07.83 Bulletin 83/29**

(84) Designated Contracting States:
**BE DE FR GB IT LU NL**

(56) References cited:
**US - A - 2 286 332**
**US - A - 2 725 975**
**US - A - 3 554 361**
**US - A - 3 802 565**

(73) Proprietor: **Hawker Siddeley Brackett Limited**
**Hythe Colchester, Essex, C02 8LB (GB)**

(72) Inventor: **Berger, Otto**
**35 Gordon Road**
**Dovercourt Harwich, Essex (GB)**
Inventor: **Gill, Bernard Frederick**
**4 Fitzgilbert Road**
**Colchester, Essex (GB)**
Inventor: **Woodham, Edward**
**4 Elm Grove**
**Wivenhoe Nr. Colchester, Essex (GB)**

(74) Representative: **Dowler, Angus Michael et al,**
**Abel & Imray Northumberland House 303-306**
**High Holborn**
**London, WC1V 7LH (GB)**

Courier Press, Leamington Spa, England.

## Improvements in and relating to travelling water screens

The invention relates to band screens for screening solids out of contaminated liquids, for example, sewage or industrial effluent.

A band screen comprises a movable continuous band of screening panels which is carried by at least one continuous chain at each side. Each chain runs in a chain guide in a screen frame, or in tracks attached to walls of a screen housing. The use of a band screen permits a screening area that is large in relation to the horizontal area occupied by the screen. Two types of band screens have been proposed, a "straight-through flow" screen and a "central flow" screen. In the "straight-through flow" screen, the screening surface of the band faces the flow of liquid to be screened at right angles, and the liquid to be screened passes first through the upward travelling section of the band and then through the downward travelling one, the screen being sealed on both sides, with a slidable seal, onto a screen chamber or housing through which the liquid to be screened is passed and into which the screening band projects. In the case of a "central flow" screen, unscreened liquid is passed onto the outside of the screening band on both sides and screened liquid passes into the space between the band sides and out through an opening in one end face of the screen. Alternatively, the unscreened liquid can enter the space between the band sides and flow outwards through the band.

The efficiency of screening is dependent on the efficiency of the slidable seal between the moving screening surface and the supporting framework or screen housing. When dealing with coarse screening, that is, removing only relatively large particles of debris from liquids with a screen mesh size of, for example, 8 to 10 mm, then leakage between the moving screening surface and the supporting framework or screen housing can be adequately regulated by the use of adjustable plates giving a fine clearance.

When the required degree of screening is finer, however, and meshes typically of 3 to 6 mm and sometimes as fine as 1 mm or even 0.5 mm have recently become common, it is necessary to reduce leakage between the moving screening surface and its surrounds as much as possible, and it has previously been proposed to provide a contact seal by using a flexible rubber or neoprene strip pressed up against a surface to effect a sliding contact seal (see, for instance, US—A—3802565). However, on occasions when a heavy debris content in the liquid to be screened causes a hydraulic differential to be set up across the screen, the pressure on this seal is also increased and it thereby acts as a brake, which sets up an excessive load on the screen driving gear, stressing up the screen structure and increasing wear on the seal.

The prevent invention provides apparatus for screening liquids, comprising a closed band of rigid screening panels each so pivotably linked to its adjacent panels that each pair of adjacent panels may pivot relative to one another about an axis and means for causing the band to move along its own length, as well as a plurality of flexible sealing fins one of which is provided on each side of each said panel, wherein each fin is in fixed sealing engagement with its respective panel along the whole length of the panel, lies in the same plane as all the other said fins on the same side of other panels, and has at each end a portion of reduced thickness overlapping a corresponding portion of the fin on the same side of the adjacent panel, each said portion so abutting the respective other fin by the mating of an arcuate surface of the said portion in the form of an arc of a notional right-circular cylinder coaxial with the said axis with a complementary part-cylindrical surface on said respective other fin that adjacent fins remain in sealing engagement with one another as their respective adjacent panels pivot relative to one another as the band moves along its own length in operation; and a rigid fixed structure adjacent each side of the band, each structure defining a groove planar, parallel-sided and everywhere parallel to the direction of motion of the band and within which the fins on the respective side of the band are received, the width of the groove being slightly greater than the thickness of the fins, and the arrangement being such that the fins are in substantially sealing engagement with the rigid structure throughout the length of the rigid structure.

Advantageously, the closed path is nowhere concave outwards and the fins extend outwards from the screen band.

The flexible fins are preferably made from a material having a low coefficient of friction, such as graphited neoprene or a similar synthetic compound. The use of this type of material results in a low frictional resistance to movement of the fins along grooves and also between adjacent fins during relative pivoting of adjacent panels as the screen passes around its path. Alternatively, the fins may be provided with metal faces over parts of their surface where in use they are in sliding engagement with adjacent fins or with other parts of the apparatus.

The walls of the grooves are preferably made of polished stainless steel or of a smooth synthetic material or a plastics coated metal to further reduce friction and to avoid corrosion.

One form of endless-band travelling water screen constructed in accordance with the invention will now be described by way of example with reference to the accompanying drawings, in which:

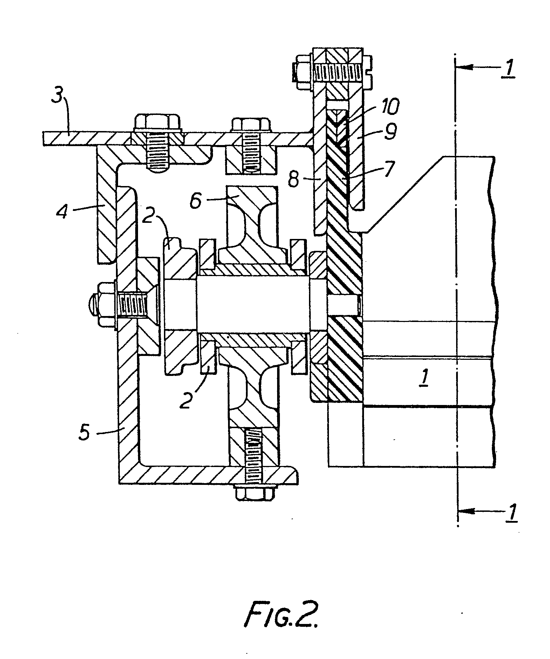

Fig. 1 is a longitudinal section of part of the screen showing the seal and chain-guide assemblies in side elevation view, and is a section along the line I—I of Fig. 2; and

Fig. 2 is a section along the line II—II of Fig. 1.

Referring to the accompanying drawings, the screening band comprises a plurality of rectangular mesh panels 1 linked together end-to-end to provide a continuous flexible band. Each panel 1 is secured along its length to, and supported by, a pair of links 2, one at each side. The links of each side of two adjacent panels pivotably joined together to provide a pair of closed, substantially planar chains, flexible in their planes.

The chains are provided at each joint with rollers 6, which are arranged to be coaxial with the axes of relative movement of the adjacent links 2 that meet at the joint.

Elongate support members 3 project from the walls on both sides of the screening chamber parallel with and just outside the path of the chains of links 2. Elongate members 4 of L-shaped cross-section are secured to the support members 3, and further elongate members 5 also of L-shaped cross-section are secured to the elongate members 4. Stainless-steel plates 8 are secured to the other edges of the support members 3 and extend perpendicularly to the support members.

The members 3, 4 and 5 and the plates 8 define channels open to the interior of the screening chamber within which the links 2 and rollers 6 are guided, with the mesh panels 1 spanning the gap between the channels. The arrangement is such that the stainless steel plates 8 are planar, parallel to each other, and outside the screening band, and that the elongate support members 3 effectively seal the gaps between the plates 8 and the adjacent walls of the screening chamber.

Further stainless steel plates 9 are clamped parallel to the plates 8, on the side away from their respective chamber walls. The plates 8 and 9 are spaced apart by spacers which also close off the spaces between them at the end further from the screening surface, defining grooves. Fins 7 made of graphited neoprene are secured along each side of each screen panel 1, and extend outwardly in a direction perpendicular to the plane of the panel and into the grooves between the plates 8 and 9. The fins are parallel sided and slightly narrower than the grooves, so that the fins can slide along the slots freely.

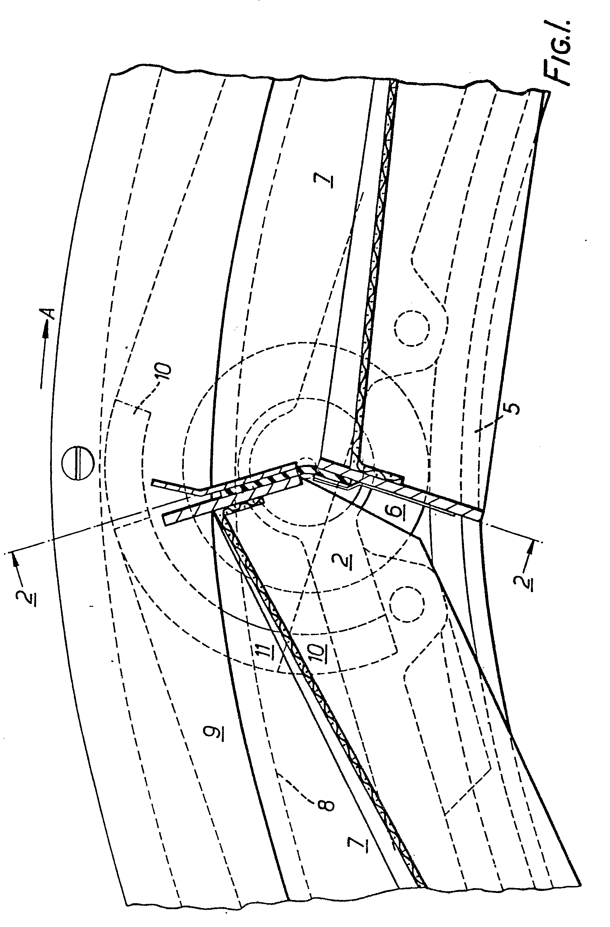

The trailing end of each fin 7, as defined with respect to the normal direction of motion of the screen which is indicated by the arrow A in Fig. 1 is a convex surface or rotation about the pivot axis between the chain link 2 corresponding to the panel to which the fin is attached and the chain link 2 corresponding to the panel following that panel, the surface having two right circular cylindrical portions of substantially equal width separated by a radial step, so that the end portion 10 of the fin is only half as thick as the rest of the fin. The leading end of each fin 7 has a corresponding, but concave, shape and adjacent fins are arranged so that their end portions 10 overlap, as may be seen at 11, with the cylindrical faces abutting. As a result of this arrangement, when the joint between adjacent screen panels 1 and chain links 2 flexes, as will happen when the screen band travels round its endless path, the end faces of the fins 7 will slide along each other, maintaining the seal between them without any part of the seal assembly being stressed or distorted.

In use, there will always be a pressure difference across the screen, which will tend to hold the fins 7 against one of the plates 8 and 9, and the presence of the other plate will tend to prevent the seal from being broken by debris.

The fins 7 are easily accessible for maintenance when the come to the top of their path, which is above the water level in the screening chamber, while the plates 8 and 9, which are fixed in the chamber and hence inaccessible except by draining the chamber, require little maintenance because of the hardness of the stainless steel from which they are made.

## Claims

1. Apparatus for screening liquids, comprising a closed band of rigid screening panels (1) each so pivotably linked to its adjacent panels that each pair of adjacent panels may pivot relative to one another about an axis and means for causing the band to move along its own length, as well as a plurality of flexible sealing fins (7) one of which is provided on each side of each said panel (1), wherein each fin (7) is in fixed sealing engagement with its respective panel (1) along the whole length of the panel, lies in the same plane as all the other fins (7) on the same side of other panels (1), and has at each end a portion (10, 11) of reduced thickness overlapping a corresponding portion (11, 10) of the fin (7) on the same side of the adjacent panel (1), each said portion (10, 11) so abutting the respective other fin (7) by the mating of an arcuate surface of the said portion in the form of an arc of a notional right-circular cylinder coaxial with the said axis with a complementary part-cylindrical surface on said respective other fin (7) that adjacent fins remain in sealing engagement with one another as their respective adjacent panels (1) pivot relative to one another as the band moves along its own length in operation; and a rigid fixed structure (8 and 9), adjacent each side of the band, each structure defining a groove planar, parallel-sided and everywhere parallel to the direction of motion of the band and within which the fins on the respective side of the band are received, the width of the groove being slightly greater than the thickness of the fins, and the arrangement being such that the fins (7) are in substantially sealing engagement with the rigid structure (8 and 9) throughout the length of the rigid structure.

2. Apparatus as claimed in claim 1, characterised in that the closed path is nowhere concave outwards and the fins (7) extend outwards from the screen band.

3. Apparatus as claimed in claim 1 or claim 2, characterised in that the fins (7) are made of graphited neoprene.

4. Apparatus as claimed in claim 1 or claim 2, characterised in that the fins (7) are provided with metal facings over parts of their surface where in use they are in sliding engagement with adjacent fins (7) or with other parts of the apparatus.

5. Apparatus as claimed in any one of claims 1 to 4, characterised in that the walls of the groove are made of stainless steel.

6. Apparatus as claimed in any one of claims 1 to 4, characterised in that the walls of the groove are made of plastics coated metal.

## Patentansprüche

1. Flüsigkeitssiebanordnung mit einem in sich geschlossenen Band aus starren Siebpaneelen (1), von denen jedes derart gelenkig mit den an es anschließenden Paneelen verbunden ist, daß jedes Paar aneinander anschließende Paneele relative zueinander um eine Achse schwenken kann, und mit Mitteln, um das Band längs seiner Längserstreckung zu bewegen, sowie mit einer Mehrzahl flexibler Dichtrippen (7), von denen eine auf jeder Seite jedes Paneels (1) vorgesehen ist, wobei jede Dichtrippe (7) in fester dichtender Anlage an dem zugeordneten Paneel (1) längs der gesamten Länge des Paneels ist, in derselben Ebene wie alle anderen Dichtrippen (7) auf derselben Seite anderer Paneele (1) liegt und an jedem Ende einen Abschnitt (10, 11) verringerter Dicke aufweist, einen entsprechenden Abschnitt (11, 10) der Dichtrippe (7) auf derselben Seite des anschließenden Paneels (1) überlappend, wobei jeder solche Abschnitt (10, 11) derart mittels Anpassung einer bogenförmigen Fläche des Abschnitts in Form eines Bogens eines gedachten geraden Kreiszylinders koaxial zu der Achse an eine komplementäre teilzylindrische Fläche der jeweils anderen Dichtrippe (7) an dieser anliegt, daß aneinander anschließende Dichtrippen in Dichtungseingriff miteinander bleiben, wenn ihre zugeordneten aneinanderschließenden Paneele (1) relativ zueinander bei der Bewegung des Bandes längs seiner eigenen Längserstreckung im Betrieb schwenken; und mit einer starren festen Struktur (8 & 9) an jeder Seite des Bandes, wobei jede Struktur eine planare, parallelseitige und überall zur Bewegungsrichtung des Bandes parallele Nut begrenzt, in der die Dichtrippen der zugeordneten Seite des Bandes aufgenommen sind, wobei die Breite der Nut geringfügig größer ist als die Dicke der Dichtrippen und die Anordnung so getroffen ist, daß die Dichtrippen (7) mit der starren Struktur (8 und 9) über die Länge der starren Struktur im wesentlichen im Dichtungseingriff sind.

2. Anordnung nach Anspruch 1, dadurch gekennzeichnet, daß der in sich geschlossene Pfad nirgends konkav auswärts ist und sich die Dichtrippen (7) von dem Siebband nach außen wegerstrecken.

3. Anordnung nach Anspruch 1 oder Anspruch 2, dadurch gekennzeichnet, daß die Dichtrippen (7) aus graphitiertem Neopren bestehen.

4. Anordnung nach Anspruch 1 oder Anspruch 2, dadurch gekennzeichnet, daß die Dichtrippen (7) auf Teilen ihrer Oberfläche, wo sie im Betrieb in Gleiteingriff mit anschließenden Dichtrippen (7) oder mit anderen Teilen der Anordnung stehen, mit Metallverkleidungen versehen sind.

5. Anordnung nach einem der Anspruch 1 bis 4, dadurch gekennzeichnet, daß die Wandungen der Nut aus korrosionsfestem Stahl bestehen.

6. Anordnung nach einem der Ansprüche 1 bis 4, dadurch gekennzeichnet, daß die Wandungen der Nut aus kunststoffbeschichtetem Metall bestehen.

## Revendications

1. Appareil destiné au tamisage de liquides, comprenant une bande sans fin de panneaux de tamisage (1) rigides, dont chacun est ainsi articulé à pivotement aux panneaux qui lui sont adjacents que chaque panneau d'une paire de anneaux adjacents peut pivoter sur l'autre autour d'un axe, et des moyens destinés à provoquer le déplacement de la bande le long de sa propre longueur, ainsi qu'une pluralité d'ailettes (7) d'étanchéigé flexibles, dont l'une est disposée sur chaque côté de chacun desdits panneaux (1), appareil dans lequel chaque ailette (7) est en contact étanche fixe avec son panneau (1) respectif le long de la longueur totale du panneau, se trouve dans le même plan que toutes les autres ailettes (7) du même côté des autres panneaux (1), et présente, à chaque extrémité, une partie (10, 11) d'épasisseur réduite recouvrant une partie correspondante (11, 10) de l'ailette (7) du même côté du panneau adjacent (1), chacune desdites parties (10, 11) venant ainsi en butée contre l'autre ailette (7) respective par la coopération d'une surface courbe de ladite partie, en forme d'arc d'un cylindre imaginaire droit de section circulaire coaxial audit axe, avec une surface complémentaire en partie cylindrique sur l'autre ailette (7) respective, de sorte que des ailettes adjacentes restent en contact étanche l'une avec l'autre lorsque leurs panneaux (1) adjacents respectifs pivotent l'un par rapport à l'autre alors que la bande en fonctionnement se déplace le long de sa propre longueur; et une structure fixe et rigide (8 et 9) adjacente de chaque côté de la bande, chaque structure délimitant une gorge plane à côtés parallèles et toujours parallèle à la direction de déplacement de la bande, et dans laquelle sont reçues les ailettes du côé respectif de la bande, la largeur de la gorge étant légèrement supérieure à l'épaisseur des ailettes, et l'agencement étant tel que les ailettes (7) sont en contact sensiblement étanche avec la structure rigide (8 et 9) sur toute la longueur de la structure rigide.

2. Appareil tel que revendiqué dans la revendication 1, caractérisé en ce que la trajectoire fermée n'est nulle part concave vers l'extérieur et que les ailettes (7) s'étendent vers l'extérieur à partir de la bande de tamis.

3. Appareil tel que revendiqué dans la revendication 1 ou la revendication 2, caractérisé en ce que les ailettes (7) sont réalisées en néoprène graphité.

4. Appareil tel que revendiqué dans la revendication 1 ou la revendication 2, caractérisé en ce que les ailettes (7) sont munies derevêtements métalliques sur des parties de leur surface sur lesquelles, en fonctionnement, elles sont en contact glissant avec des ailettes (7) adjacentes ou avec d'autres parties de l'appareil.

5. Appareil tel que revendiqué dans l'une quelconque des revendications 1 à 4, caractérisé en ce que les parois de la gorge sont réalisées en acier inoxydable.

6. Appareil tel que revendiqué dans l'une quelconque des revendications 1 à 4, caractérisé en ce que les parois de la gorge sont réalisées en métal revêtu de matière plastique.

FIG.1.

FIG.2.